# FASCICULE DE BREVET EUROPEEN

(11) **EP 0 579 544 B1**
(45) Date de publication et mention de la délivrance du brevet: **10.04.1996**
(21) Numéro de dépôt: 93401821.9
(22) Date de dépôt: 15.07.1993
(51) Int. Cl.: H02G 3/04

(54) **Ensemble profilé composite de type goulotte ou analogue**
Verbundprofilanordnung wie Rinne oder dergleichen
Composite profile assembly such as ducting or similar

(30) Priorité: 17.07.1992 FR 9208837
(43) Date de publication de la demande: 19.01.1994
(73) Titulaire: LEGRAND, F-87045 Limoges Cédex (FR)
(72) Inventeur: Buard, Yvon, F-53600 Voutre (FR)
(74) Mandataire: CABINET BONNET-THIRION

(56) Documents cités:
- EP-A- 0 149 377
- CH-A- 556 612
- FR-A- 2 473 226

## Description

La présente invention concerne d'une manière générale les ensembles profilés du genre comportant un socle et un couvercle encliqueté par deux ailes sur le socle.

Formant goulottes, plinthes, moulures ou analogues, ces ensembles profilés sont usuellement mis en oeuvre pour le logement de conducteurs électriques, voire pour celui d'appareillages électriques, tels que prises de courant ou autres, desservis par de tels conducteurs électriques.

Le plus souvent, à ce jour, ces ensembles profilés sont réalisés en matière synthétique, ne fût-ce que pour des raisons d'isolation électrique, et il est ainsi tout naturellement utilisé l'élasticité plus ou moins inhérente à toute matière synthétique pour faciliter l'encliquetage du couvercle sur le socle.

Mais la matière synthétique étant fréquemment considérée comme une matière peu noble et étant de fait d'une certaine monotonie de présentation, des tentatives ont été faites pour rapporter sur le couvercle, au moins, de tels ensembles profilés un revêtement de nature différente, et par exemple un revêtement en céramique ou comportant un décor rappelant le marbre ou le bois.

En pratique, toutes ces tentatives se sont limitées soit à un simple placage affectant la totalité de la surface concernée soit à la simple mise en oeuvre locale d'éléments rapportés.

Le placage relève d'une technique particulière relativement coûteuse.

La mise en oeuvre locale d'éléments rapportés se heurte quant à elle à des difficultés techniques en raison du jeu que peuvent connaître dans le temps ces éléments rapportés par rapport à leur support, du fait par exemple de leur veillissement et d'un inévitable différentiel entre les coefficients de dilatation thermique correspondants.

La présente invention a d'une manière générale pour objet une disposition permettant de surmonter ces difficultés et conduisant en outre à d'autres avantages.

De manière plus précise, elle a pour objet un ensemble profilé du genre comportant un socle et un couvercle à encliqueter par deux ailes sur ce socle, cet ensemble profilé étant, suivant un premier aspect, caractérisé d'une manière générale en ce que, les ailes du couvercle étant élastiquement déformables, il comporte, en outre, de manière indépendante, un sur-couvercle, qui, présentant lui-même deux ailes, est à encliqueter sur le couvercle par celles-ci.

En bref, suivant l'invention, le revêtement recherché est dissocié de son support, en l'espèce le couvercle, pour constituer par lui-même un élément autoporteur, en l'espèce un sur-couvercle, qui, initialement distinct du couvercle, est à rapporter ultérieurement, à son gré, sur celui-ci.

Ce faisant, il est avantageusement tiré un parti supplémentaire de l'élasticité que présentent les ailes du couvercle lorsque, comme il est usuel, ce couvercle est réalisé en matière synthétique.

En effet, du fait de l'encliquetage intervenant entre le sur-couvercle et le couvercle, cette élasticité permet avantageusement un rattrapage systématique tant des inévitables tolérances de fabrication intervenant dès l'origine entre ces éléments que des tout aussi inévitables jeux susceptibles ensuite de se développer dans le temps entre ceux-ci.

Autrement dit, le couvercle assume dans ce cas une fonction d'adaptation, en absorbant les éventuels jeux et tolérances entre le sur-couvercle et lui.

Mais, dissocié de ce couvercle, le sur-couvercle prévu suivant l'invention peut par ailleurs avantageusement assumer par lui-même l'une ou l'autre de plusieurs fonctions particulières.

Il peut tout d'abord constituer avantageusement un élément de finition qui n'est rapporté sur le couvercle qu'à la fin d'un chantier, en dissimulant ainsi à la vue les éventuelles souillures ayant pu affecter ce couvercle dans l'intervalle.

Il peut également, par sa constitution propre, constituer un élément d'enjolivement, en conférant par lui-même une configuration et/ou un aspect donnés à l'ensemble profilé, et, c'est le cas, notamment, lorsqu'il est réalisé en bois.

Il peut également, par sa constitution propre, ou par la présence d'adjuvants prévus à cet effet, constituer par lui-même un élément de protection, par exemple à l'égard des ondes électromagnétiques.

Il peut, enfin, constituer, au bénéfice de l'esthétique, un élément de rectification, en contrôlant extérieurement de manière rigoureuse la géométrie de l'ensemble profilé.

De fait, c'est de lui que dépend pour l'essentiel cette géométrie, puisque, par construction, il est l'élément le plus extérieur et contrebute les ailes du couvercle.

Si, comme indiqué, ce couvercle est réalisé de manière usuelle en matériau élastiquement déformable, et, en pratique, en matière synthétique, le sur-couvercle suivant l'invention peut, lui, être avantageusement réalisé en matériau plus rigide, en étant dès lors garant de la géométrie extérieure de l'ensemble.

C'est le cas, en particulier, lorsque ce sur-couvercle est réalisé en bois.

Mais, suivant un deuxième aspect de l'invention, le socle comporte en outre préférentiellement des moyens de butée, venus d'un seul tenant ou rapportés, par lesquels il contrebute lui-même les ailes du sur-couvercle du côté de ces ailes opposé aux ailes du couvercle.

Outre qu'il est ainsi obtenu un contrôle encore plus rigoureux de la géométrie extérieure de l'ensemble, l'encliquetage du sur-couvercle sur le couvercle, et, par son intermédiaire, celui du couvercle sur le socle s'en trouvent avantageusement affermis, et, partant, avantageusement fiabilisés, au bénéfice de la sécurité.

Certes, il est connu, par le brevet français qui, déposé le 31 Décembre 1980 sous le No 80 27975, a été publié sous le No 2.473.226, un ensemble profilé qui, outre un socle et un couvercle à encliqueter par deux ailes sur ce socle, comporte, intérieurement, des sous-couvercles.

Mais, en pratique, ces sous-couvercles, dont il n'est pas établi qu'ils s'étendent longitudinalement en continu sur toute la longueur de l'ensemble profilé, ne s'étendent transversalement que sur une fraction de la largeur de cet ensemble profilé, entre des cloisons internes compartimentant intérieurement celui-ci.

Il s'agit donc plus de simples entretoises destinées à contrebuter ces cloisons internes pour en assurer ou en parfaire le maintien que de réels sous-couvercles.

En toute hypothèse, n'intervenant pas sur les ailes du couvercle, ces sous-couvercles ne sauraient assumer l'ensemble des fonctions précédemment répertoriées.

C'est au contraire le cas du sur-couvercle suivant l'invention.

Grâce à ce sur-couvercle, formant de manière indépendante un revêtement, l'ensemble profilé suivant l'invention est plus facile à fabriquer, et vieillit mieux, que les ensembles profilés de même type sur le couvercle et/ou le socle desquels il est à ce jour au moins localement rapporté un revêtement.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective d'un ensemble profilé suivant l'invention, représenté monté ;
la figure 2 reprend, à échelle supérieure, et en simple vue de bout, le détail de la figure 1 repéré par un encart II sur cette figure 1 ;
les figures 3, 4 et 5 sont, chacune respectivement, à l'échelle de la figure 1, des vues de bout de chacun des trois constituants de cet ensemble profilé ;
la figure 6 est, à l'échelle de la figure 1, une vue partielle en perspective illustrant la mise en oeuvre de l'ensemble profilé suivant l'invention ;
les figures 7, 8, 9 et 10 sont des vues qui, analogues, chacune respectivement, à celles des figures 2, 3, 4 et 5, se rapportent à une première variante de réalisation ;
les figures 11, 12 et 13 sont des vues qui, analogues, chacune respectivement, à celles des figures 2, 3 et 4, se rapportent à une deuxième variante de réalisation ;
les figures 14, 15 et 16 sont des vues qui, analogues, chacune respectivement, à celles des figures 2, 3 et 5, se rapportent à une troisième variante de réalisation ;
les figures 17, 18, 19 et 20 sont des vues qui, analogues, chacune respectivement, à celles des figures 2, 3, 4 et 5, se rapportent à une quatrième variante de réalisation ;
la figure 21 est une vue qui, analogue à celle de la figure 17, se rapporte à une cinquième variante de réalisation.

Globalement, et tel qu'illustré sur ces figures, l'ensemble profilé 10 suivant l'invention comporte, de manière connue en soi, à la manière par exemple de nombreuses goulottes, plinthes ou moulures, d'une part, un socle 11, qui, par une semelle 12, est adapté à être appliqué à une quelconque surface de support, par exemple un mur, et, d'autre part, un couvercle 13, qui, par deux ailes 14, est à encliqueter sur le socle 11.

En pratique, le socle 11 et le couvercle 13 sont des profilés à section transversale en U propres à être emboîtés l'un sur l'autre.

Outre sa semelle 12, le socle 11 présente, en effet, longitudinalement en saillie sur cette semelle 12, sensiblement perpendiculairement à celle-ci, deux flasques latéraux 15.

Dans les formes de réalisation représentées, ces flasques latéraux 15 s'étendent en retrait par rapport aux bords longitudinaux de la semelle 12.

Conjointement, le couvercle 13 présente, outre ses ailes 14, une partie médiane 16, qui, en service, s'étend sensiblement parallèlement à la semelle 12 du socle 11.

Dans les formes de réalisation représentées, les ailes 14 s'étendent le long des bords longitudinaux mêmes de la partie médiane 16, en se raccordant à celle-ci par un arrondi.

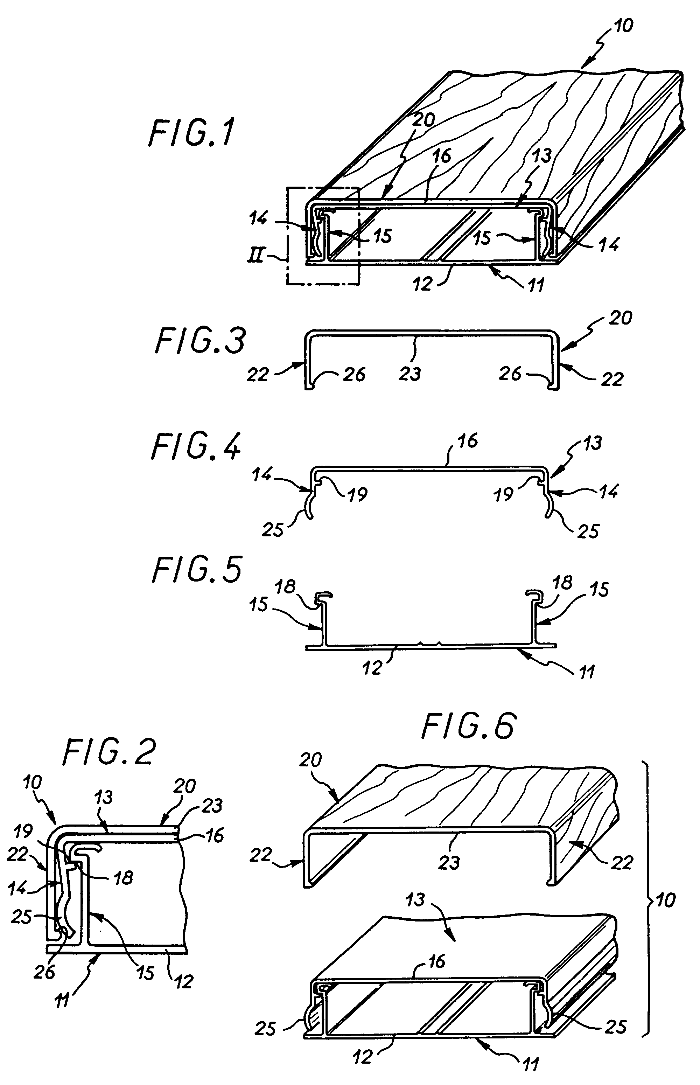

Dans les formes de réalisation plus particulièrement représentées sur les figures 1 à 16, mais, ainsi qu'il apparaîtra ultérieurement, il n'en est pas nécessairement obligatoirement ainsi, ces ailes 14 s'étendent, au repos, sensiblement perpendiculairement à la partie médiane 16, figure 4, et elles courent sensiblement sur toute la hauteur des flasques latéraux 15 du socle 11, figures 1 et 6.

Quoi qu'il en soit, les ailes 14 du couvercle 13 s'étendent à l'extérieur des flasques latéraux 15 du socle 11, et il est prévu des moyens d'encliquetage entre elles et ces flasques latéraux 15.

Par exemple, et tel que représenté, ces moyens d'encliquetage comportent, d'une part, un épaulement 18 prévu en décrochement sur les flasques latéraux 15 du socle 11, sur la surface extérieure de ces flasques latéraux 15, et, d'autre part, un épaulement 19 prévu en correspondance en saillie sur les ailes 14 du couvercle 13, sur la surface intérieure de ces ailes 14.

Dans les formes de réalisation représentées, l'épaulement 18 des flasques latéraux 15 du socle 11 résulte d'un repli en forme de crosse que présentent ces flasques latéraux 15 vers l'intérieur, et l'épaulement 19 des ailes 14 du couvercle 13 résulte d'une nervure que présentent en saillie ces ailes 14.

Les dispositions correspondantes étant bien connues par elles-mêmes et ne faisant pas partie de la présente invention, elles ne seront pas décrites plus en détail ici.

Elles sont de surcroît susceptibles de nombreuses variantes de réalisation.

Suivant l'invention, les ailes 14 du couvercle 13 étant élastiquement déformables, l'ensemble profilé 10 comporte, en outre, de manière indépendante de ce couvercle 13 et du socle 11, un sur-couvercle 20 qui, présentant lui-même deux ailes 22, est à encliqueter sur le couvercle 13 par ces ailes 22.

Comme le socle 11 et le couvercle 13, ce sur-couvercle 20 est en pratique un profilé à section transversale en U.

Outre ses ailes 22, il comporte donc une partie médiane 23 qui, en service, se superpose à la partie médiane 16 du couvercle 13, en s'étendant alors elle aussi parallèlement à la semelle 12 du socle 11.

En pratique, dans les formes de réalisation représentées, les ailes 22 du sur-couvercle 20 s'étendent directement le long des bords longitudinaux mêmes de la partie médiane 23, en se raccordant à cette dernière par un arrondi, et elles courent globalement sur toute la hauteur des flasques latéraux 15 du socle 11, jusqu'au voisinage immédiat de la semelle 12 de ce socle 11.

Le socle 11 est par exemple en matière synthétique.

Il en est de même du couvercle 13, qui est donc en matériau élastiquement déformable, et il en résulte que ses ailes 14 sont elles-mêmes élastiquement déformables.

Par contre, le sur-couvercle 20 est préférentiellement réalisé en matériau plus rigide.

Il s'agit par exemple de bois.

Quoi qu'il en soit, ce sur-couvercle 20 est autoporteur.

En pratique, l'élasticité des ailes 14 du couvercle 13 résulte au moins pour partie de ce que, à leur raccordement à la partie médiane 16 qu'elles bordent, elles peuvent jouer par rapport à cette partie médiane 16, à la manière d'une articulation.

Mais cette élasticité peut également résulter au moins pour partie de la forme même des ailes 14.

C'est le cas, notamment, dans la forme de réalisation plus particulièrement représentée sur les figures 1 à 6.

Dans cette forme de réalisation, les ailes 14 du couvercle 13 sont en effet cintrées, en section transversale, sur une partie au moins de leur hauteur, à compter de leur bord libre, avec la concavité de leur partie cintrée 25 correspondante tournée du côté de la partie médiane 16 qu'elles bordent.

Conjointement, pour leur encliquetage sur les ailes 14 du couvercle 13, les ailes 22 du sur-couvercle 20 présentent en saillie sur leur surface intérieure un épaulement 26.

Dans la forme de réalisation plus particulièrement représentée sur les figures 1 à 6, cet épaulement 26 appartient à un bourrelet qui court le long du bord libre de ces ailes 22 en saillie sur la surface intérieure de celles-ci.

En service, et tel que représenté à la figure 6, il est d'abord procédé à la pose du socle 11, puis à l'encliquetage du couvercle 13 sur celui-ci, suivant les dispositions usuelles en la matière.

Suivant l'invention, il est procédé ensuite à l'encliquetage du sur-couvercle 20 sur le couvercle 13.

Au terme de cet encliquetage, qui se fait frontalement, l'épaulement 26 des ailes 22 du sur-couvercle 20 se trouve en prise avec la partie cintrée 25 des ailes 14 du couvercle 13, figure 2, ce qui assure la retenue de ce sur-couvercle 20 sur ce couvercle 13, et, conjointement, les ailes 14 du couvercle 13 se trouvent contraintes par les ailes 22 du sur-couvercle 20 en direction des flasques latéraux 15 du socle 11, ce qui confirme la retenue de ce couvercle 13 sur ce socle 11.

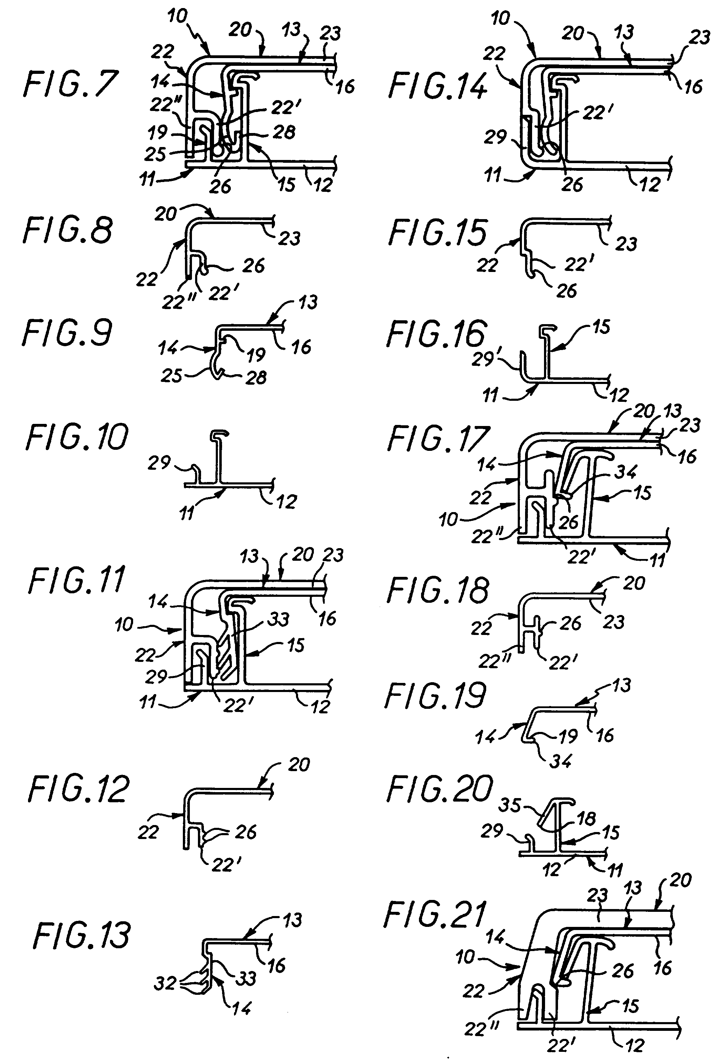

Dans la variante de réalisation représentée sur les figures 7 à 10, les ailes 14 du couvercle 13 présentent, en section transversale, le long de leur bord libre, pour leur élasticité, au-delà de leur partie cintrée 25, une partie en rebroussement 28 dirigée vers l'intérieur, suivant une configuration générale en U pour l'ensemble.

Par ailleurs, dans cette forme de réalisation, et il en est de même dans les suivantes, le socle 11 comporte des moyens de butée par lesquels il contrebute les ailes 22 du sur-couvercle 20 du côté de ces ailes 22 opposé aux ailes 14 du couvercle 13.

Dans la forme de réalisation plus particulièrement représentée sur les figures 7 à 10, ces moyens de butée sont constitués par des lamelles 29 que le socle 11 présente latéralement en saillie sur sa semelle 12, entre les bords longitudinaux de cette dernière et ses flasques latéraux 15.

Le long de leur bord libre, au moins, ces lamelles 29 s'étendent en oblique par rapport à la semelle 12, en divergeant l'une par rapport à l'autre au fur et à mesure qu'elles s'éloignent de cette semelle 12.

Une seule est visible sur les figures.

Conjointement, le long de leur bord libre, les ailes 22 du sur-couvercle 20 se dédoublent en deux portions, l'une 22' intérieure, l'autre 22'' extérieure, par lesquelles elles coiffent chacune respectivement les lamelles 29 du socle 11.

La portion 22' intérieure s'étend en décrochement vers l'intérieur par rapport à la partie courante des ailes 22, et c'est elle qui porte le bourrelet formant l'épaulement 26 nécessaire à l'encliquetage de ces ailes 22 sur les ailes 14 du couvercle 13.

La portion 22'' extérieure s'étend au contraire en continuité avec la partie courante des ailes 22.

Ainsi qu'il est aisé de le comprendre, la portion oblique des lamelles 29 du socle 11 facilite l'engagement sur elles des ailes 22 du sur-couvercle 20.

Après cet engagement, et tel que représenté pour l'une d'elles sur la figure 7, les ailes 22 du sur-couvercle 20 portent par leur portion 22' intérieure contre les lamelles 29 du socle 11 et se trouvent ainsi contrebutées vers l'intérieur par ces dernières.

Dans la variante de réalisation représentée sur les figures 11 à 13, l'élasticité des ailes 14 du couvercle 13 résulte au moins pour partie d'au moins une lamelle 32 que ces ailes 14 présentent en saillie sur la surface externe.

En pratique, il y a ainsi, échelonnées en hauteur sur une portion 33 des ailes 14 décalée vers l'intérieur par rapport à la partie courante de celles-ci, trois lamelles 32, et ces lamelles 32 s'étendent en oblique vis-à-vis de la partie médiane 16 du couvercle 13, en s'écartant de cette partie médiane 16 au fur et à mesure qu'elles s'éloignent de l'aile 14 qui les porte, à la manière de barbillons.

Conjointement, la portion 22' intérieure des ailes 22 du sur-couvercle 20 présente, échelonnés en hauteur, pour coopération avec l'une et/ou l'autre des lamelles 32 des ailes 14 du couvercle 13, plusieurs bourrelets formant chacun un épaulement 26.

Dans ce qui précède, les ailes 22 du sur-couvercle 20 s'étendent extérieurement de manière apparente sur toute la hauteur de l'ensemble profilé 10.

Seul est donc pour l'essentiel visible dans ce cas ce sur-couvercle 20, abstraction faite des bords longitudinaux de la semelle 12 du socle 11.

Dans la forme de réalisation représentée sur les figures 14 à 16, les ailes 22 du sur-couvercle 20 ne s'étendent extérieurement de manière apparente que sur une portion de la hauteur de l'ensemble profilé 10.

Par exemple, et tel que représenté, elles ne sont apparentes que sur la moitié de la hauteur de cet ensemble profilé 10.

Elles se situent en pratique dans le prolongement de lamelles 29' venues de la semelle 12 du socle 11.

Dans la forme de réalisation représentée, ces lamelles 29' s'étendent directement le long des bords longitudinaux mêmes de la semelle 12 du socle 11, en se raccordant par un arrondi à celle-ci, à la manière, pour l'esthétique, de l'arrondi par lequel les ailes 22 du sur-couvercle 20 se raccordent à la partie médiane 23 de celui-ci.

Comme précédemment, les lamelles 29' du socle 11 constituent des moyens de butée pour les ailes 22 du sur-couvercle 20, ces ailes 22 présentant, en décrochement vers l'intérieur par rapport à leur partie courante, une portion 22' par laquelle elles portent sur ces lamelles 29'.

Dans les formes de réalisation représentées sur les figures 17 à 21, les ailes 14 du couvercle 13 s'étendent en oblique par rapport à la partie médiane 16 qu'elles bordent, en divergeant l'une par rapport à l'autre au fur et à mesure qu'elles s'éloignent de cette partie médiane 16.

Le long de leur bord libre, ces ailes 14 sont en pratique bordées par un retour 34, qui, dirigé vers l'intérieur, s'étend sensiblement parallèlement à la partie médiane 16.

C'est ce retour 34 qui forme l'épaulement 19 nécessaire à l'encliquetage de ces ailes 14 sur les flasques latéraux 15 du socle 11.

Conjointement, dans ces formes de réalisation, l'épaulement 18 correspondant de ces flasques latéraux 15 est formé par la tranche d'un retour 35 en forme de crosse que présentent en oblique vers l'extérieur ces flasques latéraux 15.

Du fait de leur obliquité, l'élasticité des ailes 14 du couvercle 13 se trouve accentuée.

En outre, leur élasticité résulte dans ce cas également au moins pour partie de celle des flasques latéraux 15 du socle 11 sur lesquels elles sont engagées.

En effet, en service, et tel que représenté, figure 17, les ailes 14 du couvercle 13 contraignent les flasques latéraux 15 du socle 11 à converger légèrement l'un vers l'autre.

Les essais montrent qu'il en résulte avantageusement une meilleure planéité pour la partie médiane 16 du couvercle 13, la partie médiane 23 du sur-couvercle 20 venant se plaquer plus énergiquement sur cette partie médiane 16, en s'opposant ainsi à tout cintrage de celle-ci.

Pour le reste, les dispositions sont globalement du même type que celles précédemment décrites.

En particulier, les ailes 22 du sur-couvercle 20 se dédoublent en deux portions 22', 22'', pour coopération en appui avec des lamelles 29 du socle 11.

Dans la forme de réalisation représentée sur les figures 17 à 20, cependant, la portion 22' intérieure de ces ailes 22 se prolonge vers le haut au-delà du retour par lequel elle se raccorde à leur partie courante, et elle présente au voisinage de sa racine le bourrelet formant l'épaulement 26 nécessaire à l'encliquetage sur le couvercle 13.

En pratique, cet encliquetage se fait par venue en prise de ce bourrelet avec le retour 34 des ailes 14 du couvercle 13.

Quoi qu'il en soit, et ainsi qu'il est aisé de le comprendre, l'obliquité des ailes 14 du couvercle 13 facilite avantageusement l'engagement du sur-couvercle 20 sur le couvercle 13.

Dans la forme de réalisation, plus massive, représentée sur la figure 21, l'épaulement 26 des ailes 22 du sur-couvercle 20 est directement formé par le retour par lequel la portion 22' intérieure de ces ailes 22 se raccorde à la partie courante de celles-ci.

En outre, dans cette forme de réalisation, les ailes 22 du sur-couvercle 20 sont globalement obliques vis-à-vis de la partie médiane 23 qu'elles bordent, à la manière des ailes 14 du couvercle 13, sauf en ce qui concerne la portion 22" extérieure qu'elles présentent le long de leur bord libre, qui, elle, reste droite, perpendiculairement à la semelle 12 du socle 11.

Bien entendu, la présente invention ne se limite pas aux formes de réalisation décrites et représentées, mais englobe toute variante d'exécution et/ou de combinaison de leurs divers éléments dans le cadre des revendications.

## Revendications

1. Ensemble profilé, du genre comportant un socle (11), et un couvercle (13) à encliqueter par deux ailes (14) sur le socle (11), caractérisé en ce que, les ailes (14) du couvercle (13) étant élastiquement déformables, il comporte, en outre, de manière indépendante, un sur-couvercle (20) qui, présentant lui-même deux ailes (22), est à encliqueter sur le couvercle (13) par ces ailes (22).

2. Ensemble profilé suivant la revendication 1, caractérisé en ce que l'élasticité des ailes (14) du couvercle (13) résulte au moins pour partie de ce que, à leur raccordement à la partie médiane (16) qu'elles bordent, elles peuvent jouer par rapport à cette partie médiane (16) à la manière d'une articulation.

3. Ensemble profilé suivant la revendication 2, caractérisé en ce que, au repos, les ailes (14) du couvercle (13) s'étendent en oblique par rapport à la partie médiane (16) qu'elles bordent, en divergeant l'une par rapport à l'autre au fur et à mesure qu'elles s'éloignent de cette partie médiane (16).

4. Ensemble profilé suivant la revendication 1, caractérisé en ce que l'élasticité des ailes (14) du couvercle (13) résulte au moins pour partie de leur forme.

5. Ensemble profilé suivant la revendication 4, caractérisé en ce que, en section transversale, les ailes (14) du couvercle (13) sont cintrées sur une partie (25) au moins de leur hauteur, avec la concavité de cette partie cintrée (25) tournée du côté de la partie médiane (16) qu'elles bordent.

6. Ensemble profilé suivant l'une quelconque des revendications 4, 5, caractérisé en ce que, en section transversale, les ailes (14) du couvercle (13) présentent le long de leur bord une partie en rebroussement (28) dirigée vers l'intérieur.

7. Ensemble profilé suivant la revendication 1, caractérisé en ce que l'élasticité des ailes (14) du couvercle (13) résulte au moins pour partie d'au moins une lamelle (32) qu'elles présentent en saillie sur leur surface externe.

8. Ensemble profilé suivant la revendication 7, caractérisé en ce que ladite lamelle (32) s'étend en oblique vis-à-vis de la partie médiane (16) du couvercle (13), en s'écartant de cette partie médiane (16) au fur et à mesure qu'elle s'éloigne de l'aile (14) qui la porte, à la manière d'un barbillon.

9. Ensemble profilé suivant la revendication 1, caractérisé en ce que l'élasticité des ailes (14) du couvercle (13) résulte au moins pour partie de celle des flasques latéraux (15) du socle (11) sur lesquels elles sont engagées.

10. Ensemble profilé suivant l'une quelconque des revendications 1 à 9, caractérisé en ce que, pour leur encliquetage sur les ailes (14) du couvercle (13), les ailes (22) du sur-couvercle (20) présentent en saillie sur leur surface intérieure un épaulement (26).

11. Ensemble profilé suivant l'une quelconque des revendications 1 à 10, caractérisé en ce que, alors que le couvercle (13) est réalisé en matériau élastiquement déformable, tel que matière synthétique, le sur-couvercle (20) est réalisé en matériau plus rigide, tel que bois.

12. Ensemble profilé suivant l'une quelconque des revendications 1 à 11, caractérisé en ce que le socle (11) comporte des moyens de butée (29, 29') par lesquels il contrebute les ailes (22) du sur-couvercle (20) du côté de ces ailes (22) opposé aux ailes (14) du couvercle (13).

13. Ensemble profilé suivant la revendication 12, caractérisé en ce que lesdits moyens de butée sont constitués par des lamelles (29) que le socle (11) présente latéralement en saillie sur sa semelle (12).

14. Ensemble profilé suivant la revendication 13, caractérisé en ce que le long de leur bord libre, au moins, lesdites lamelles (29) s'étendent en oblique par rapport à la semelle (12) du socle (11), en divergeant l'une par rapport à l'autre au fur et à mesure qu'elles s'éloignent de ladite semelle (12).

15. Ensemble profilé suivant l'une quelconque des revendications 13, 14, caractérisé en ce que, le long de leur bord, les ailes (22) du sur-couvercle (20) se dédoublent en deux portions (22', 22''), l'une intérieure, l'autre extérieure, par lesquelles elles coiffent les lamelles (29) du socle (11).

16. Ensemble profilé suivant l'une quelconque des revendications 1 à 15, caractérisé en ce que, extérieurement, les ailes (22) du sur-couvercle (20) s'étendent de manière apparente sur toute la hauteur de l'ensemble.

17. Ensemble profilé suivant l'une quelconque des revendications 1 à 15, caractérisé en ce que, extérieurement, les ailes (22) du sur-couvercle (20) ne s'étendent de manière apparente que sur une portion de la hauteur de l'ensemble.

18. Ensemble profilé suivant la revendication 17, caractérisé en ce que, extérieurement, les ailes (22) du sur-couvercle (20) sont dans le prolongement de lamelles (29') venues de la semelle (12) du socle (11).

19. Ensemble suivant les revendications 13, 15 et 18, prises conjointement, caractérisé en ce que lesdites lamelles (29') constituent des moyens de butée pour les ailes (22) du sur-couvercle (20).

## Patentansprüche

1. Profilanordnung mit einem Sockel (11) und einem durch zwei Schenkel (14) auf dem Sockel (11) einzurastenden Deckel (13),
dadurch gekennzeichnet,
daß sie bei elastisch verformbaren Schenkeln (14) des Deckels (13) außerdem unabhängig einen Überdeckel (20) aufweist, der selbst zwei Schenkel (22) aufweist und auf den Deckel (13) durch diese Schenkel (22) einzurasten ist.

2. Profilanordnung nach Anspruch 1, dadurch gekennzeichnet, daß sich die Elastizität der Schenkel (14) des Deckels (13) mindestens zum Teil daraus ergibt, daß sie an ihrem Anschluß an den mittleren Teil (16), den sie säumen, bezüglich dieses mittleren Teils (16) nach der Art eines Gelenks spielen können.

3. Profilanordnung nach Anspruch 2, dadurch gekennzeichnet, daß die Schenkel (14) des Deckels (13) sich im Ruhezustand schräg bezüglich des mittleren Teils (16), den sie säumen, erstrecken, indem sie in bezug aufeinander in dem Maße divergieren, wie sie sich von diesem mittleren Teil (16) entfernen.

4. Profilanordnung nach Anspruch 1, dadurch gekennzeichnet, daß sich die Elastizität der Schenkel (14) des Deckels (13) mindestens zum Teil aus ihrer Form ergibt.

5. Profilanordnung nach Anspruch 4, dadurch gekennzeichnet, daß die Schenkel (14) des Deckels (13) im Querschnitt auf mindestens einem Teil (25) ihrer Höhe gekrümmt sind, wobei die Konkavität dieses gekrümmten Teils (25) der Seite des mittleren Teils (16), den sie säumen, zugewandt ist.

6. Profilanordnung nach einem der Ansprüche 4, 5, dadurch gekennzeichnet, daß die Schenkel (14) des Deckels (13) im Querschnitt längs ihres Randes eine nach innen gerichtete Umkehr (28) aufweisen.

7. Profilanordnung nach Anspruch 1, dadurch gekennzeichnet, daß sich die Elastizität der Schenkel (14) des Deckels (13) zumindest zum Teil aus mindestens einer Lamelle (32) ergibt, die sie auf ihrer Außenfläche vorspringend aufweisen.

8. Profilanordnung nach Anspruch 7, dadurch gekennzeichnet, daß diese Lamelle (32) sich bezüglich des mittleren Teils (16) des Deckels (13) schräg erstreckt, indem sie sich nach der Art eines Widerhakens von diesem mittleren Teil (16) in dem Maße entfernt, wie sie sich von dem sie tragenden Schenkel (14) entfernt.

9. Profilanordnung nach Anspruch 1, dadurch gekennzeichnet, daß sich die Elastizität der Schenkel (14) des Deckels (13) mindestens zum Teil aus der der seitlichen Wangen (15) des Sockels (11) ergibt, auf die sie aufgesteckt sind.

10. Profilanordnung nach einem der Ansprüche 1 bis 9, dadurch gekennzeichnet, daß die Schenkel (22) des Überdeckels (20) zu ihrem Einrasten auf den Schenkeln (14) des Deckels (13) auf ihrer Innenseite vorspringend eine Schulter (26) aufweisen.

11. Profilanordnung nach einem der Ansprüche 1 bis 10, dadurch gekennzeichnet, daß der Überdeckel (20), während der Deckel (13) aus elastisch verformbarem Werkstoff wie Kunststoff hergestellt ist, aus einem starreren Werkstoff wie Holz hergestellt ist.

12. Profilanordnung nach einem der Ansprüche 1 bis 11, dadurch gekennzeichnet, daß der Sockel (11) Anschlagsmittel (29, 29') aufweist, durch die er die Schenkel (22) des Überdeckels (20) auf der den Schenkeln (14) des Deckels (13) entgegengesetzten Seite dieser Schenkel (22) abstrebt.

13. Profilanordnung nach Anspruch 12, dadurch gekennzeichnet, daß diese Anschlagsmittel aus Lamellen (29) bestehen, die der Sockel (11) seitlich hervorspringend auf seiner Sohle (12) besitzt.

14. Profilanordnung nach Anspruch 13, dadurch gekennzeichnet, daß diese Lamellen (29) mindestens längs ihres freien Randes sich bezüglich der Sohle (12) des Sockels (11) schräg erstrecken, indem sie in bezug aufeinander in dem Maße divergieren, wie sie sich von dieser Sohle (12) entfernen.

15. Profilanordnung nach einem der Ansprüche 13, 14, dadurch gekennzeichnet, daß die Schenkel (22) des Überdeckels (20) sich längs ihres Randes zu zwei Teilen (22', 22"), einem inneren und einem äußeren, verdoppeln, mit denen sie die Lamellen (29) des Sockels (11) umgreifen.

16. Profilanordnung nach einem der Ansprüche 1 bis 15, dadurch gekennzeichnet, daß sich die Schenkel (22) des Überdeckels (20) außen auf der ganzen Höhe der Anordnung sichtbar erstrecken.

17. Profilanordnung nach einem der Ansprüche 1 bis 15, dadurch gekennzeichnet, daß sich die Schenkel (22) des Überdeckels (20) außen nur über einen Teil der Höhe der Anordnung sichtbar erstrecken.

18. Profilanordnung nach Anspruch 17, dadurch gekennzeichnet, daß die Schenkel (22) des Überdeckels (20) außen in der Verlängerung von von der Sohle (12) des Sockels (11) kommenden Lamellen (29') sind.

19. Anordnung nach den Ansprüchen 13, 15 und 18 zusammen, dadurch gekennzeichnet, daß diese Lamellen (29') Anschlagsmittel für die Schenkel (22) des Überdeckels (20) bilden.

## Claims

1. A profiled assembly of the type comprising a base (11) and a cover (13) to be latched by means of two limbs (14) on to the base (11), characterised in that, the limbs (14) of the cover (13) being elastically deformable, it further comprises independently an over-cover (20) which, itself having two limbs (22), is to be latched on to the cover (13) by means of said limbs (22).

2. A profiled assembly according to claim 1 characterised in that the elasticity of the limbs (14) of the cover (13) results at least in part from the fact that, at their connection to the central portion (16) which they border, they can move in relation to said central portion (16) in the manner of a hinge.

3. A profiled assembly according to claim 2 characterised in that in the rest condition the limbs (14) of the cover (13) extend inclinedly with respect to the central portion (16) that they border, diverging relative to each other as they extend away from said central portion (16).

4. A profiled assembly according to claim 1 characterised in that the elasticity of the limbs (14) of the cover (13) results at least in part from their shape.

5. A profiled assembly according to claim 4 characterised in that in cross-section the limbs (14) of the cover (13) are curved over a part (25) at least of their height, with the concavity of said curved part (25) directed to the side of the central portion (16) which they border.

6. A profiled assembly according to either one of claims 4 and 5 characterised in that in cross-section the limbs (14) of the cover (13) have along their edge an inwardly directed bent-back portion (28).

7. A profiled assembly according to claim 1 characterised in that the elasticity of the limbs (14) of the cover (13) results at least in part from at least one slat portion (32) that they have in projecting relationship on their outside surface.

8. A profiled assembly according to claim 7 characterised in that said slat portion (32) extends inclinedly with respect to the central portion (16) of the cover (13), moving away from said central portion (16) as it extends away from the limb (14) which carries it, in the manner of a barb.

9. A profiled assembly according to claim 1 characterised in that the elasticity of the limbs (14) of the cover (13) results at least in part from that of the side plate portions (15) of the base (11) against which they are engaged.

10. A profiled assembly according to any one of claims 1 to 9 characterised in that, for their latching engagement on to the limbs (14) of the cover (13), the limbs (22) of the over-cover (20) have a shoulder (26) in projecting relationship on their inside surface.

11. A profiled assembly according to any one of claims 1 to 10 characterised in that, when the cover (13) is made of elastically deformable material such as synthetic material, the over-cover (20) is made of more rigid material such as wood.

12. A profiled assembly according to any one of claims 1 to 11 characterised in that the base (11) comprises abutment means (29, 29') by way of which it supports the limbs (22) of the over-cover (20) on the side of said limbs (22) which is opposite to the limbs (14) of the cover (13).

13. A profiled assembly according to claim 12 characterised in that said abutment means are formed by slat portions (29) that the base (11) has laterally in projecting relationship on its bottom portion (12).

14. A profiled assembly according to claim 13 characterised in that along their free edge at least said slat portions (29) extend inclinedly with respect to the bottom portion (12) of the base (11), diverging relative to each other as they extend away from said bottom portion (12).

15. A profiled assembly according to either one of claims 13 and 14 characterised in that along their edge the limbs (22) of the over-cover (20) divide into two portions (22', 22"), one internal and the other external, by way of which they fit over the slat portions (29) of the base (11).

16. A profiled assembly according to any one of claims 1 to 15 characterised in that externally the limbs (22) of the over-cover (20) extend visibly over the entire height of the assembly.

17. A profiled assembly according to any one of claims 1 to 15 characterised in that externally the limbs (22) of the over-cover (20) extend visibly only over a portion of the height of the assembly.

18. A profiled assembly according to claim 17 characterised in that externally the limbs (22) of the over-cover (20) are in line with slat portions (29') which come from the bottom portion (12) of the base (11).

19. An assembly according to claims 13, 15 and 18 in combination characterised in that said slat portions (29') constitute abutment means for the limbs (22) of the over-cover (20).
